# EUROPEAN PATENT APPLICATION

(11) **EP 2 819 085 A1**
(43) Date of publication of application: **31.12.2014**
(21) Application number: 13275226.2
(22) Date of filing: 20.09.2013
(51) Int. Cl.: G06Q 30/02

(54) **Terminal management apparatus and method of controlling the same**

(30) Priority: 28.06.2013 KR 20130075995
(71) Applicant: Samsung Electro-Mechanics Co., Ltd, Suwon, Gyunggi-Do (KR)
(72) Inventor: Sung, Jong Woo, Gyunggi-do (KR); Lee, Yun Jong, Gyunggi-do (KR); Na, Young II, Gyunggi-do (KR); Park, Young Seo, Gyunggi-do (KR); Kim, Hyun Hak, Gyunggi-do (KR); Lim, Louis, Gyunggi-do (KR)
(74) Representative: Potter Clarkson LLP

(57) **Abstract**

There is provided a method of controlling a terminal management apparatus, the method including, acquiring identification information regarding ESL terminals through an assigning process, acquiring an identification number of each of the ESL terminals, based on the identification information, acquiring update information regarding the ESL terminals, acquiring a group key based on the identification number and the update information, acquiring group ID information and group offset information regarding the respective ESL terminals, based on the identification number and the group key, and transmitting an update message including the group key, the group ID information, and the group offset information.

## Description

### CROSS-REFERENCE TO RELATED APPLICATIONS

This application claims the priority of Korean Patent Application No. 10-2013-0075995 filed on June 28, 2013, in the Korean Intellectual Property Office, the disclosure of which is incorporated herein by reference.

### BACKGROUND OF THE INVENTION

### Field of the Invention

The present invention relates to a terminal management apparatus applicable to an electronic shelf labeling (ESL) system and a method of controlling the same.

### Description of the Related Art

A great deal of research into the "Internet of things," allowing objects to have a function like a computer, or the like, has been conducted. The Internet of things refers to allowing objects to be made into smart apparatuses, which may allow for control of objects while automatically identifying and recognizing objects by tagging a mini-sized RFID and a sensor on everyday objects having no computing function. As a function of displaying names or information through RFID or sensors being tagged on things, a smart label replacing existing paper or plastic labels is presented and the function and use thereof will be described hereinafter. In particular, an electronic price tag (or electronic shelf label (ESL)) having the smart label applied to a store, identifies things and displays goods information, such as price, in connection with the Internet, by installing an electronic label apparatus having a wireless communications capability, as well as e-paper display and processing, in a store, and attaching the electronic label apparatus to things.

In general, a paper label displaying information, such as a selling price, discount information, cost, and the place of origin, on goods displayed on a shelf has been used in a store. In a price displaying scheme using the paper label, when goods information is changed or a goods display position is changed, the paper label in current use needs to be discarded and a new paper label needs to be created, which consistently incurs costs for maintenance and causes a waste of raw materials, such as paper, in connection with the environment, leading to a negative effect on the protection of environment. In detail, in the case of using the paper label, labor costs are incurred and errors may easily occur, due to manual labor. Further, it is impossible to rapidly change a large number of labels.

Therefore, as a means for replacing existing paper labels, research and development of the electronic price tag (or electronic shelf label (ESL)) has been actively conducted.

The electronic price tag is disposed on the shelf within a store to display a variety of price information through a display unit, such as an LCD, and when the displayed goods information is changed or the display position of goods is changed, automatically receives new goods information to update the information on the displayed goods so as to be repeatedly used.

In detail, the electronic price tag may save labor costs and remove the possibility of the occurrence of errors due to manual labor. Further, the electronic price tag may be automatically updated and may rapidly change a large number of labels at once. In particular, for marketing, such as an urgent sale and a low price guarantee, it is essential to use the electronic price tag.

Since many kinds of goods may be displayed within the market, it may be impossible to connect an external power supply to the electronic price tag or perform communications in a wired manner. Therefore, the electronic price tag is operated wirelessly and needs to be configured to have low power consumption, a small size, and a low price. Further, it is impossible to substantially connect a regular power supply to all of the electronic price tags from the outside. Therefore, the electronic price tag may be powered with a battery, or the like. Therefore, in order to consistently use the electronic price tag for several years, with only exchanging a battery once, it is essential to reduce power consumption of the electronic price tag itself.

Therefore, to allow a system operating the electronic price tag to perform efficient communications, a need exists for a method of reducing a size of transmitted messages and efficiently configuring and grouping an address or an identifier.

Patent Documents 1 and 2 described in the following Related Art Document disclose a method of grouping a wireless terminal, but do not disclose a configuration for reducing power consumption of the electronic price tags by dynamically grouping a plurality of electronic price tags communicating with a single gateway.

### [Related Art Document]

### [Patent Document]

(Patent Document 1) 1. Japanese Patent Laid-Open Publication No. 2010-200080
(Patent Document 2) 2. Korean Patent Laid-Open Publication No. 2005-0014315

### SUMMARY OF THE INVENTION

An aspect of the present invention provides an electronic shelf label (ESL) system capable of significantly reducing energy consumption by significantly reducing a size of messages transmitted and received between an ESL terminal and a terminal management apparatus.

According to an aspect of the present invention, there is provided a terminal management apparatus, including: a communications unit acquiring identification information regarding ESL terminals and update information regarding the ESL terminals; and a control unit acquiring a group key based on the identification information and the update information and acquiring group ID information and group offset information regarding the respective ESL terminals based on the identification information and the group key.

The communications unit may transmit an update message including the group key, the group ID information, and the group offset information.

The terminal management apparatus may further include: a storage unit storing the identification information and the update information.

The control unit may acquire an identification number of each of the ESL terminals.

The control unit may perform a modular operation between the identification number and the group key.

According to another aspect of the present invention, there is provided a method of controlling a terminal management apparatus, the method including: acquiring identification information regarding ESL terminals; acquiring update information regarding the ESL terminals; acquiring a group key based on the identification information and the update information; acquiring group ID information and group offset information regarding the respective ESL terminals, based on the identification information and the group key; and transmitting an update message including the group key, the group ID information, and the group offset information.

The acquiring of the identification information may include acquiring an identification number of each of the ESL terminals.

The acquiring of the group ID information and the group offset information may include performing a modular operation between the identification number and the group key.

According to yet another aspect of the present invention, there is provided a method of controlling a terminal management apparatus, the method including: acquiring identification information regarding ESL terminals through an assigning process; acquiring an identification number of each of the ESL terminals, based on the identification information; acquiring update information regarding the ESL terminals; acquiring a group key based on the identification number and the update information; acquiring group ID information and group offset information regarding the respective ESL terminals, based on the identification number and the group key; and transmitting an update message including the group key, the group ID information, and the group offset information.

The acquiring of the group ID information and the group offset information may include performing a modular operation between the identification number and the group key.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a block configuration diagram of an electronic shelf label (ESL) system according to an embodiment of the present invention;
FIG. 2 is a diagram illustrating a state in which the ESL system according to the embodiment of the present invention is applied to an actual store;
FIG. 3 is a block diagram illustrating a terminal management apparatus according to an embodiment of the present invention;
FIG. 4 is a flow chart illustrating a method of controlling a terminal management apparatus according to an embodiment of the present invention;
FIG. 5 is a diagram illustrating an example of identification information and identification number for ESL terminals;
FIG. 6 is a diagram illustrating an example of update information acquired by the terminal management apparatus;
FIG. 7 is a diagram illustrating results obtained by allowing the terminal management apparatus to acquire group ID information and group offset information regarding the ESL terminals to be managed;
FIG. 8 is a diagram illustrating the ESL terminal to be updated based on the group ID information and the group offset information; and
FIG. 9 is a block diagram illustrating an ESL terminal according to an embodiment of the present invention.

### DETAILED DESCRIPTION OF THE EMBODIMENTS

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity, and the same reference numerals will be used throughout to designate the same or like elements. The terms "modules", and "units" as used herein are used only in order to clarify the specification. Therefore, the above-mentioned terms do not have meanings or roles that are distinguished from each other in and of themselves.

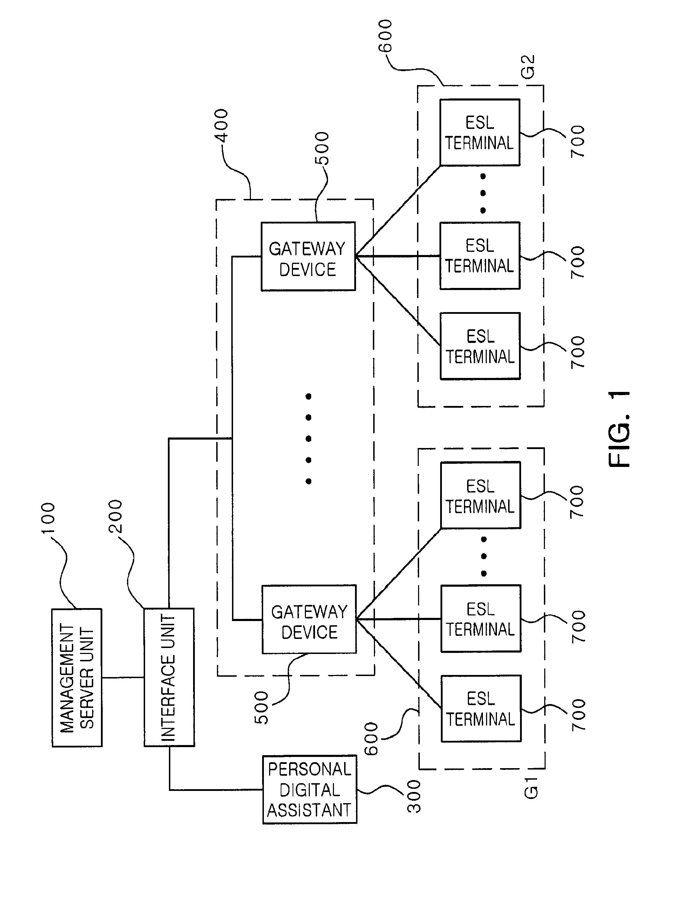

FIG. 1 is a block configuration diagram of an electronic shelf label (ESL) system according to an embodiment of the present invention.

As illustrated in FIG. 1, the ESL system according to the embodiment of the present invention may include a management server unit 110, an interface unit 200, a gateway unit 400, and an ESL tag unit 600.

The management server unit 100 may be implemented as a database server which stores and manages goods information regarding goods displayed within a store. The management server unit may store a variety of pieces of information required to operate the store as well as store the goods information. Further, the management server unit 100 may write and manage command messages for performing various functions, such as synchronization, updating, changes, and the like, of goods information displayed on ESL terminals 700. To this end, the management server unit 100 may include a database of the ESL terminals 700 and goods information displayed thereon. That is, the management server unit 100 may include a database stored by interconnecting identification information regarding the ESL terminals 700 with goods information displayed on the corresponding ESL terminal.

The interface unit 200 may serve to form a communications channel between the management server unit 100 and the gateway unit 400 so as to transmit command messages (for example, a goods information update message, a goods information change message, a managing information acquisition message, and the like) generated in the management server unit 100 to the gateway unit 400 in real time. For example, the interface unit 200 may serve to configure the messages generated in the management server unit 100 as packets suitable for a pre-established communications scheme used for communications with the gateway unit 400 and transmit the packets. Further, the interface unit 200 receives a receiving acknowledgement message transmitted from the gateway unit 400 based on the pre-established communications scheme and the management server unit 100 converts the message into a receivable message to transmit the message, thereby allowing the subsequent operations to be performed.

The gateway unit 400 may include a plurality of gateway devices 500 communicating with the management server unit 100. Each gateway device 500 of the gateway unit 400 may analyze data received from the management server unit 100 to determine whether messages or data to be transmitted to the ESL terminals 700 communicating therewith are present and transmit the determined messages or data to the corresponding ESL terminals 700. The gateway device 500 may configure the messages to be transmitted to the ESL terminals 700 as packets based on the pre-established communications scheme and transmit the packets to the ESL terminals 700. Further, the gateway device 500 may transmit receiving acknowledgement messages received from the ESL terminals 700 to a server. As the communications scheme between the gateway device 500 and the ESL terminals 700, a wireless communications scheme, such as a Zigbee (that is, IEEE 802.15.4) scheme, to allow a large number of the ESL terminals 700 to communicate with each other through a single gateway device 500 may be used.

The plurality of gateway devices 500 may be provided, and since a wirelessly communicable region for each gateway device 500 is restricted, the single gateway device 500 may manage the ESL terminals 700 included in a data transmittable region. That is, as illustrated in FIG. 1, the single gateway device 500 may manage the ESL terminals within a communicable region G1 thereof and similarly, the single gateway device 500 may manage the ESL terminals within a communicable region G2 thereof.

The plurality of ESL terminals 700 communicating with the single gateway device 500 are commonly defined by an ESL tag unit 600.

The ESL terminals 700 may display the data on goods information received from the gateway device 500 on a display and may transmit operation results depending on the receipt of data to the gateway device 500. As described above, to enable the communications between the plurality of ESL terminals 700 with the single gateway device 500, a wireless communications scheme, such as a Zigbee scheme, may be applied. In order to more efficiently implement the wireless communications scheme, a communications operation in which a channel is divided into two channels, such as a wake up channel and a data channel at the time of the communications between the gateway device and the ESL terminals may be performed.

The wake up channel refers to a communications channel for transmitting a wake up signal indicating whether or not data to be received is present. Further, the data channel refers to a communications channel for transmitting data used for an actual display.

The ESL terminal 700 is disposed in an environment in which it is difficult to regularly supply power from the outside and therefore, the ESL terminal 700 is powered using a battery. Therefore, in order for the ESL terminal 700 to be used for a long time over several years and only have a battery exchanged once, it is important to minimize power consumption. To this end, the ESL terminal is operated using a wake-up scheme. That is, the ESL terminal 700 wakes up at a preset period of time to be able to determine whether data to be received by the ESL terminal is present. Alternatively, the ESL terminal 700 is woken up by an external interrupt to be able to determine whether data to be received by the ESL terminal is present. In this case, when it is determined that the data to be received by the ESL terminal 700 is not present, the ESL terminal 700 is operated in a sleep mode to minimize power consumption until the subsequent wake up period. That is, only in a case in which it is determined that the data to be received by the ESL terminal 700 is present, the ESL terminal may supply power to predetermined function units to perform an operation of receiving and processing data.

Another embodiment of the present invention may further include a personal digital assistant (PDA) 300 which enables a user to directly communicate with the management server unit 100. In particular, another embodiment of the present invention may include the personal digital assistant in order to interconnect a smart label with objects. In the store, an operation may be performed using the PDA. To this end, the smart label and the objects may use a barcode, RFID, or NFC. When the barcode is used, assigning may be a process of reading a tag and managing information by using the barcode. Unassigning is a process of deleting information regarding objects. All goods are provided with EAN codes. However, even the same goods may be provided with different EANs, depending on manufacturing countries or factories. For example, the same types of soda may have different EANs. Therefore, in order to apply the same numbering to the same types of soda, a code, such as NAN, may be used.

The EAN and the NAN may be mutually converted and conversion information may be stored in the management server unit.

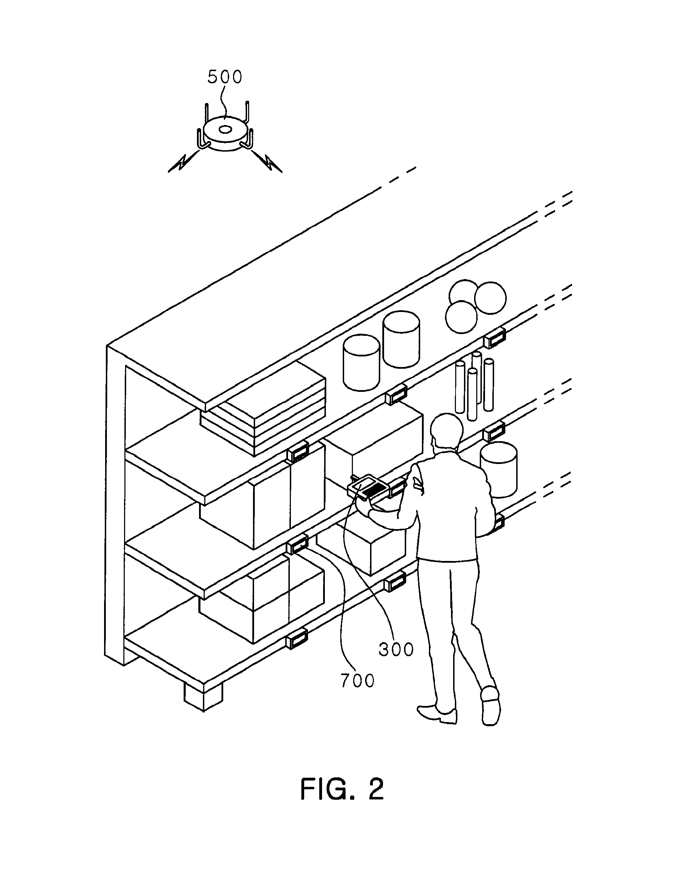

FIG. 2 is a diagram illustrating a state in which the ESL system according to the embodiment of the present invention is applied to an actual store.

As illustrated in FIG. 2, the ESL terminal 700 displaying information regarding goods may be disposed on a shelf on which goods are displayed and the ESL terminal 700 may change, activate, or inactivate price information while communicating with the gateway device 500 disposed in a predetermined position within a store. A store manager uses the PDA 300 to be able to create or inquire about association (assigning or unassigning) relationship between goods and the ESL terminal 700. For the operation, the PDA may be connected to a server or a customer server. Further, the gateway device 500 may be connected to the ESL terminal 700 through a predetermined Zigbee channel.

Hereinafter, the terminal management apparatus applied to the ESL system configured as described above will be described in more detail.

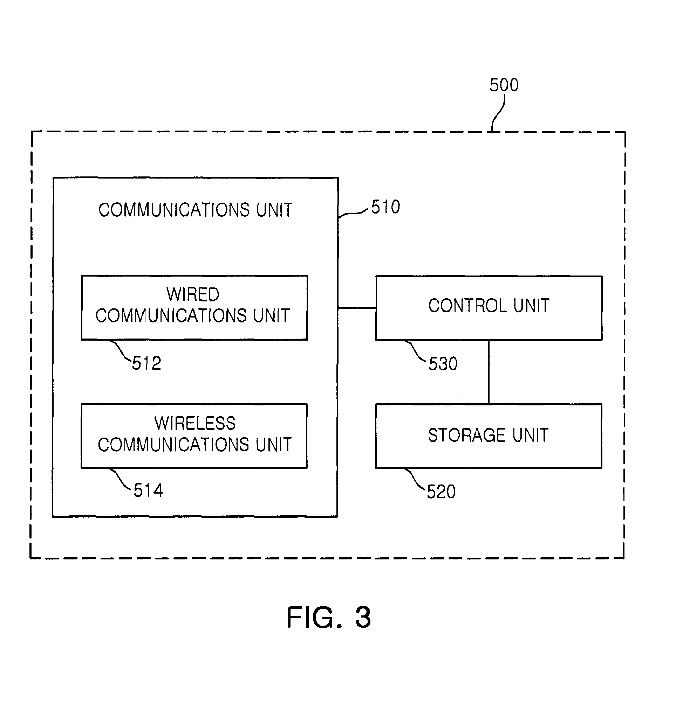

FIG. 3 is a block diagram illustrating a terminal management apparatus according to an embodiment of the present invention.

The terminal management apparatus may perform identification number (short address) management for the plurality of ESL terminals, grouping management for the ESL terminals based on identification numbers (short addresses), and the like.

In detail, the terminal management apparatus may be implemented within the management server unit 100 illustrated in FIG. 1. Further, the terminal management apparatus may be implemented within the gateway device 500 illustrated in FIG. 1. Alternatively, the terminal management apparatus may be implemented within the management server unit 100 and the gateway device 500 illustrated in FIG. 1.

The terminal management apparatus 500 may include a communications unit 510, a storage unit 520, and a control unit 530. The components illustrated in FIG. 3 are not essential components. Therefore, the gateway device may have more or less components than those illustrated in FIG. 1.

The communications unit 510 may include a wired communications unit 512 and a wireless communications unit 514.

The wired communications unit 512 may function to enable wired communications. For example, the wired communications unit 512 may receive update data for goods information from the management server unit 100. The update data for the goods information may include information on whether the goods information displayed by the ESL terminals is updated, updated price, and the like.

The wireless communications unit 514 may function to enable wireless communications between the gateway device 500 and the ESL terminals 700. For example, the wireless communications unit 514 may transmit the update data for the goods information to the ESL terminals 700.

Meanwhile, according to the embodiment of the present invention, the communications unit 510 may acquire identification information regarding the ESL terminals from the ESL terminals 700. In this case, the identification information regarding the ESL terminals may refer to MAC addresses of the ESL terminals.

Meanwhile, the terminal management apparatus may acquire the short addresses (identification numbers) for respective ESL terminals based on the identification information. In detail, the terminal management apparatus may acquire the identification information in the assigning of the ESL terminals and acquire the short addresses (identification numbers) based on the identification information.

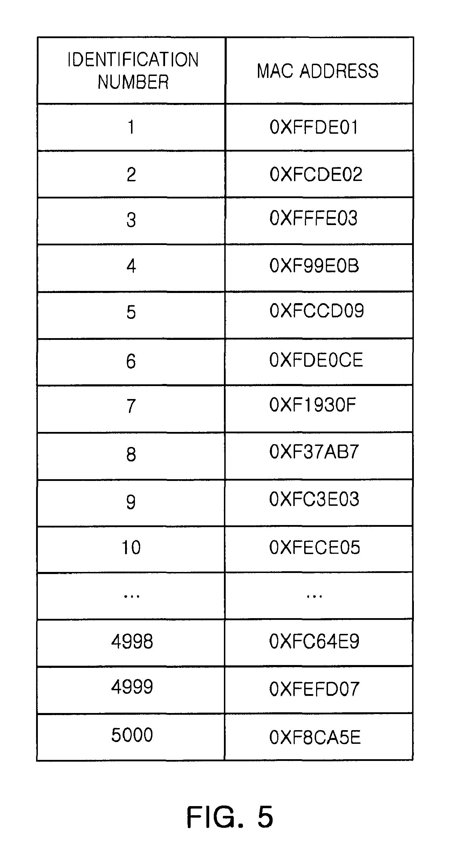

In this case, the short address may represent each ESL terminal using a small amount of data. With reference to this, the description of FIG. 5 will be described below.

Further, according to the embodiment of the present invention, the communications unit 510 may acquire the update information regarding the ESL terminals from the management server unit 100. In this case, the update information for the ESL terminals may commonly include an object (for example, MAC address of ESL terminal) to be updated, information (for example, update data for goods information) to be updated, and the like.

The control unit 530 may receive, analyze, and process the data received by the communications unit 510. For example, when the communications unit 510 receives the update data for goods information to allow the control unit 530 to process the update data, the control unit 530 may acquire the information on whether the goods information is updated, the updated price, and the like.

Meanwhile, according to the embodiment of the present invention, the control unit 530 may acquire a group key based on the identification information and the update information. In this case, the group key may include information for dividing the plurality of ESL terminals 700 managed by the single terminal management apparatus into groups. That is, the group key may be a grouping number of the plurality of ESL terminals 700. For example, the plurality of ESL terminals 700 to be managed by the single terminal management apparatus may be divided into groups corresponding to the grouping number.

Further, according to the embodiment of the present invention, the control unit 530 may acquire group ID information and group offset information regarding respective ESL terminals, based on the identification information and the group key. Herein, the group ID information regarding the ESL terminals may refer to information regarding groups to which the respective ESL terminals belong. Further, the group offset information regarding the ESL terminals may be provided to classify the ESL terminals belonging to predetermined groups.

A method of allowing the control unit 530 to acquire the group ID information and the group offset information regarding respective ESL terminals will be described below.

Further, according to the embodiment of the present invention, the control unit 530 may acquire the identification numbers of the respective ESL terminals. In this case, the identification number may include information for indicating the respective ESL terminals.

The storage unit 520 may store a program for operating the control unit 530 and may also store input/output data (for example, information regarding goods, update date for goods information, data processed by the control unit 530, identification information regarding the ESL terminals, update information regarding the ESL terminals, and the like).

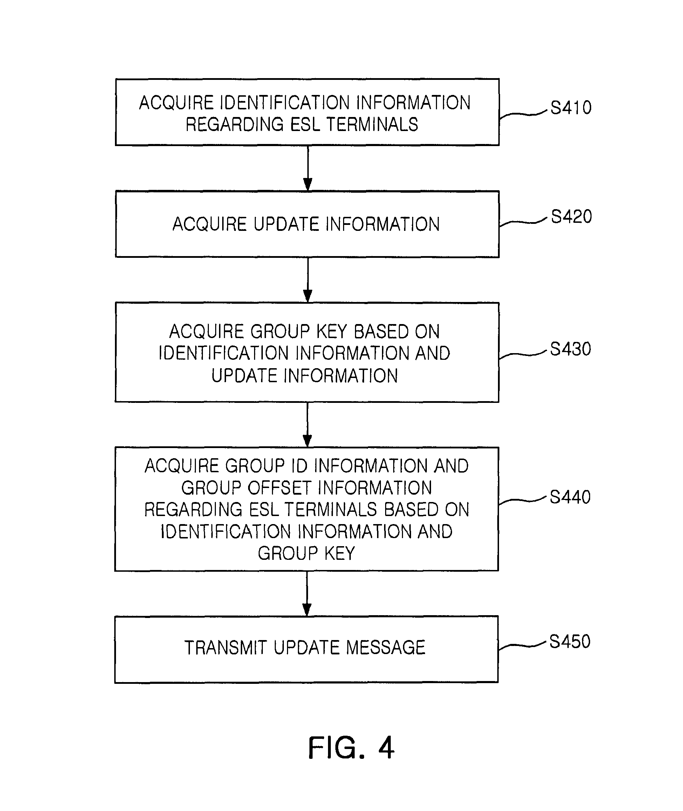

FIG. 4 is a flow chart illustrating a method of controlling a terminal management apparatus according to an embodiment of the present invention.

According to the embodiment of the present invention, the terminal management apparatus may acquire identification information regarding the ESL terminals (S410).

Meanwhile, the terminal management apparatus may acquire the identification numbers for the respective ESL terminals based on the identification information at a predetermined time after the identification information is obtained. In this case, the identification numbers for the ELS terminals may refer to continuous values assigned to the plurality of ESL terminals managed by the single terminal management apparatus.

Preferably, the terminal management apparatus may acquire the short addresses (identification numbers) for respective ESL terminals prior to the acquiring of the group ID information and the group offset information regarding the respective ESL terminals.

FIG. 5 is a diagram illustrating an example of identification information and identification numbers for ESL terminals.

Meanwhile, it is necessary that the identification numbers do not overlap with each other, and an address of a node joined to or withdrawn from a network is easily allocated or returned.

The terminal management apparatus may acquire the MAC addresses of the ESL terminals managed by the terminal management apparatus. The case in which the single terminal management apparatus manages 5000 ESL terminals will be described herein.

Referring to FIG. 5, an MAC address of a first ESL terminal is 0XFFDE01 an MAC address of a second ESL terminal is 0XFFDE02, and an MAC address of a 5000th ESL terminal is 0XF8CA5E.

As described above, the MAC addresses of the ESL terminals have random numbers and the lengths thereof are relatively long. Therefore, in order to designate a specific ESL terminal, using the MAC address may be inefficient in terms of communications.

Therefore, the terminal management apparatus may acquire the identification numbers for the respective ESL terminals based on the MAC addresses. In this case, the identification numbers for the ELS terminals may be consecutive integers assigned to the plurality of ESL terminals managed by the single terminal management apparatus. Alternatively, the identification numbers may be the short addresses assigned to the respective ESL terminals. For example, the first ESL terminal (MAC address: 0XFFDE01) may be defined by identification number 1, the second ESL terminal (MAC address: 0XFFDE02) may be defined by identification number 2, and the 5000-th ESL terminal (MAC address: 0XF8CA5E) may be defined by identification number 5000.

As described above, respective ESL terminals may be represented using a small amount of data by assigning the identification numbers to the respective ESL terminals. Further, communications efficiency thereof may be improved.

Meanwhile, the terminal management apparatus may store mapping relationships between the respective ESL terminals' MAC addresses and the respective ESL terminals. For example, the terminal management apparatus may store relationships between the ESL terminals' MAC addresses and the ESL terminals based on a scheme, such as in the table of FIG. 5.

Referring to FIG. 5, the terminal management apparatus may use the identification number 1 as an identifier, rather than using the MAC address, when data to be transmitted to the first ESL terminal (MAC address: 0XFFDE01) is generated.

Meanwhile, after the terminal management apparatus acquires the identification numbers for the respective ESL terminals, the terminal management apparatus may inform the respective ESL terminals of the identification numbers.

Meanwhile, according to the embodiment of the present invention, the terminal management apparatus may acquire the update information regarding the ESL terminals (S420).

In this case, the update information regarding the ESL terminals may commonly include information regarding objects (for example, MAC addresses of the ESL terminals) to be updated, information (for example, update data for goods information) to be updated, and the like.

The terminal management apparatus may acquire the update information regarding the ESL terminals from the management server unit 100.

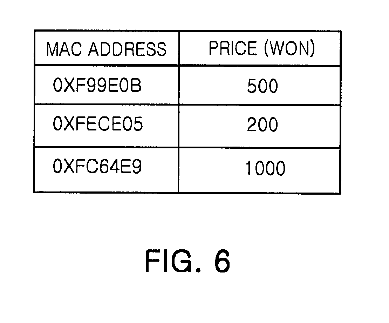

FIG. 6 is a diagram illustrating an example of update information acquired by the terminal management apparatus.

Referring to FIG. 6, the terminal management apparatus may determine the fact that price information regarding the ESL terminal of which the MAC address is 0XF99E0B needs to be updated to 500 won. Further, the terminal management apparatus may determine the fact that price information regarding the ESL terminal of which the MAC address is 0XFECE05 needs to be updated to 200 won. Further, the terminal management apparatus may determine the fact that price information regarding the ESL terminal of which the MAC address is 0XFC64E9 needs to be updated to 1000 won.

Meanwhile, according to the embodiment of the present invention, the terminal management apparatus may acquire the group key based on the identification information regarding the ESL terminals and the update information (S430).

In this case, the group key may include information for dividing the plurality of ESL terminals 700 managed by the single terminal management apparatus into groups. That is, the group key may be a grouping number of the plurality of ESL terminals 700. For example, the plurality of ESL terminals 700 managed by the single terminal management apparatus 500 may be divided into groups corresponding to the grouping number.

For example, the terminal management apparatus may acquire the group key based on the number of ESL terminals which are being managed, the number of ESL terminals to be updated, and the like.

When a portion of the ESL terminals managed by the terminal management apparatus is intended to be updated, the terminal management apparatus may change the group key in response to the number of ESL terminals to be updated. Therefore, the terminal management apparatus may dynamically manage the number of groups of ESL terminals. Further, the terminal management apparatus may configure the number of ESL terminals per group, which may be optimal for communications.

As such, according to the embodiment of the present invention, a grouping based address method for efficiently designating the plurality of ESL terminals may be used.

Meanwhile, according to the embodiment of the present invention, the terminal management apparatus may acquire the group ID information and the group offset information regarding the respective ESL terminals, based on the identification information regarding the ESL terminals and the group key(S440).

Herein, the group ID information regarding the ESL terminals may refer to information regarding groups to which the respective ESL terminals belong. Further, the group offset information regarding the ESL terminals may be provided to classify the ESL terminals belonging to predetermined groups.

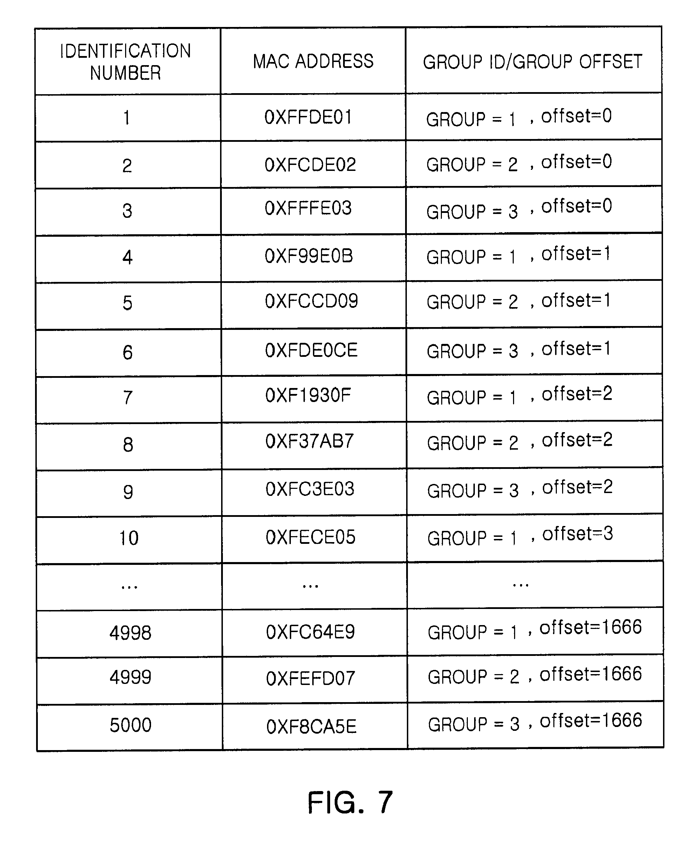

FIG. 7 is a diagram illustrating results obtained by allowing the terminal management apparatus to acquire group ID information and group offset information regarding the ESL terminals to be managed.

According to the embodiment of the present invention, it is assumed that the terminal management apparatus determines the group key as being '3'.

According to the embodiment of the present invention, the group offset information regarding a predetermined ESL terminal may be determined based on a quotient obtained by dividing the identification number of the ESL terminal by the group key.

Further, according to the embodiment of the present invention, the group ID information regarding a predetermined ESL terminal may be determined based on the remainder obtained by dividing the identification number of the ESL terminal by the group key. That is, the group ID information may be calculated by a modular operation between the identification number and the group key.

When the identification numbers are set to be consecutive integers, the offsets of the ESL terminals within the predetermined group may be set to be consecutive integer values.

Referring to FIG. 7, when the terminal management apparatus determines the group key as being 3, the group ID information and the group offset information regarding the respective ESL terminals may be determined.

It can be confirmed that the group offset information regarding the first ESL terminal is set to be '0' and the group ID information regarding the first ESL terminal is set to be '1', by the modular operation between the identification number '1' and the group key '3'.

Further, it can be confirmed that the group offset information regarding the second ESL terminal is set to be '0' and the group ID information regarding the second ESL terminal is set to be '2', by the modular operation between the identification number '2' and the group key '3'.

Further, it can be confirmed that the group offset information regarding a 4998-th ESL terminal is set to be '1666' and the group ID information regarding the 4998-th ESL terminal is set to be '1', by the modular operation between the identification number '4998' and the group key '3'.

According to the method, the terminal management apparatus may acquire the group ID information and the group offset information regarding the ESL terminals managed by the apparatus.

Therefore, the terminal management apparatus may group and manage the ESL terminals by the group ID information. Further, the terminal management apparatus may individually manage the ESL terminals within one group by the group offset information.

According to the embodiment of the present invention, when a portion of the managed ESL terminals is updated, the terminal management apparatus may update the overall ESL terminals contained in a group to which a portion of the managed ESL terminal pertains and may also update the portion of the ESL terminals within the group.

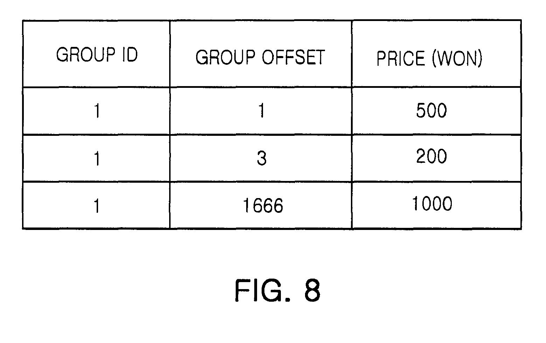

FIG. 8 is a diagram illustrating the ESL terminal to be updated based on the group ID information and the group offset information.

That is, as illustrated in FIG. 6, the terminal management apparatus may specify the ESL terminal, an update object, by using the MAC address of the ESL terminal. However, the method of using the MAC address consumes a large amount of data to specify the update object.

Referring to FIG. 8, the ESL terminal, the update object, may be specified by the group ID information and the group offset information. Therefore, the ESL system according to the embodiment of the present invention may efficiently use data transmitted and received between the terminal management apparatus and the ESL terminal.

Meanwhile, according to the embodiment of the present invention, the terminal management apparatus may transmit an update message including the group key, the group ID information, and the group offset information to the ESL terminal (S450).

In this case, the update message may include the group ID information and the group offset information regarding the ESL terminal to be updated.

The ESL terminal receiving the update message may determine whether the wake up has been performed, based on the update message.

That is, the ESL terminal is informed of the identification number and then may acquire the update message.

The ESL terminal may acquire the group ID information and the group offset information based on the identification number and the group key.

Therefore, the ESL terminal may determine whether the group ID information and the group offset information acquired by the ESL terminal are included in the group ID information and the group offset information included in the update message.

When it is determined that the group ID information and the group offset information acquired by the ESL terminal are included in the group ID information and the group offset information included in the update message, the ESL terminal may be woken up to receive the update information. As the detailed method thereof, a general data transmitting and receiving method between the terminal management apparatus and the ESL terminal may be used, and therefore the detailed description thereof will be omitted.

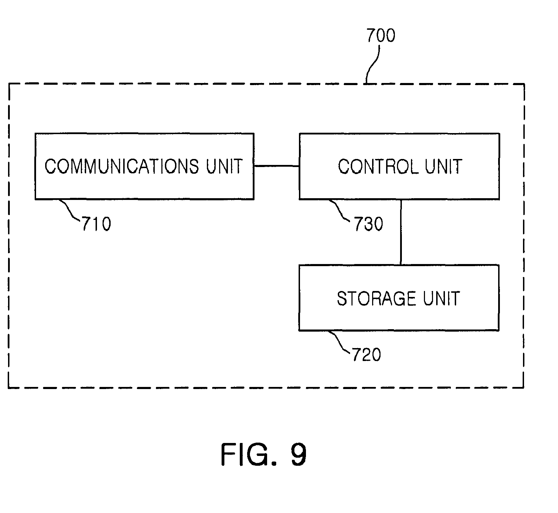

FIG. 9 is a block diagram illustrating the ESL terminal according to the embodiment of the present invention.

Each ESL terminal 700 may include a communications unit 710, a storage unit 720, a control unit 730, and a display unit 740. The components illustrated in FIG. 9 are not essential components. Therefore, the gateway device may have more or less components than those illustrated in FIG. 1.

The communications unit 710 may function to enable wireless communications between the gateway device 500 and the ESL terminal 700. For example, the communications unit 710 may receive the update date for goods information from the gateway device 500. Further, the communications unit may receive the update message including the group key, the group ID information, and the group offset information.

The control unit 730 may receive, analyze, and process the data received by the communications unit 710. For example, the control unit 730 may determine whether the control unit is woken up, based on the update message.

Further, the control unit 530 may acquire the own group ID information and group offset information thereof using the group key based on the update message.

Further, the control unit 530 may compare the group ID information and the group offset information acquired by the control unit 530 with the group ID information and the group offset information included in the update message.

The storage unit 720 may store a program for operating the control unit 730 and may also store the input/output data (for example, information regarding goods, update date for goods information, and data processed by the control unit 730).

The methods according to the embodiments of the present invention may be used individually or in combination thereof. Further, processes configuring each embodiment may be used separately from processes configuring another embodiment or by being combined therewith.

Further, the methods described above may be implemented in a recording medium that may be read by a computer or a device similar to the computer using, for example, software, hardware, or a combination thereof.

With hardware implementation, the methods described herein may be implemented using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and electrical units for performing other functions.

With software implementation, procedures and functions described in the present specification may be implemented by separate software modules. The software modules may be implemented by a software code written with a program language. The software code may be stored in the storage unit and may be executed by a processor.

As set forth above, according to the embodiments of the present invention, an electronic shelf label (ESL) system capable of significantly reducing energy consumption by significantly reducing a size of messages transmitted and received between an ESL terminal and a terminal management apparatus can be provided.

While the present invention has been shown and described in connection with the embodiments, it will be apparent to those skilled in the art that modifications and variations can be made without departing from the spirit and scope of the invention as defined by the appended claims.

## Claims

1. A terminal management apparatus, comprising:
a communications unit acquiring identification information regarding ESL terminals and update information regarding the ESL terminals; and
a control unit acquiring a group key based on the identification information and the update information and acquiring group ID information and group offset information regarding the respective ESL terminals based on the identification information and the group key.

2. The terminal management apparatus of claim 1, wherein the communications unit transmits an update message including the group key, the group ID information, and the group offset information.

3. The terminal management apparatus of claim 1, further comprising a storage unit storing the identification information and the update information.

4. The terminal management apparatus of claim 1, wherein the control unit acquires an identification number of each of the ESL terminals.

5. The terminal management apparatus of claim 4, wherein the control unit performs a modular operation between the identification number and the group key.

6. A method of controlling a terminal management apparatus, the method comprising:
acquiring identification information regarding ESL terminals;
acquiring update information regarding the ESL terminals;
acquiring a group key based on the identification information and the update information;
acquiring group ID information and group offset information regarding the respective ESL terminals, based on the identification information and the group key; and
transmitting an update message including the group key, the group ID information, and the group offset information.

7. The method of claim 6, wherein the acquiring of the identification information includes acquiring an identification number of each of the ESL terminals.

8. The method of claim 7, wherein the acquiring of the group ID information and the group offset information includes performing a modular operation between the identification number and the group key.

9. A method of controlling a terminal management apparatus, the method comprising:
acquiring identification information regarding ESL terminals through an assigning process;
acquiring an identification number of each of the ESL terminals, based on the identification information;
acquiring update information regarding the ESL terminals;
acquiring a group key based on the identification number and the update information;
acquiring group ID information and group offset information regarding the respective ESL terminals, based on the identification number and the group key; and
transmitting an update message including the group key, the group ID information, and the group offset information.

10. The method of claim 9, wherein the acquiring of the group ID information and the group offset information includes performing a modular operation between the identification number and the group key.
